# EUROPEAN PATENT APPLICATION

(11) **EP 4 764 676 A1**
(43) Date of publication of application: **24.06.2026**
(21) Application number: 24222589.4
(22) Date of filing: 20.12.2024
(51) Int. Cl.: G02F 1/03, G02F 1/035, H01S 5/026

(54) **THIN FILM ELECTRO-OPTIC PHOTONIC INTEGRATED CIRCUIT AND RELATED FABRICATION METHODS**

(71) Applicant: CSEM Centre Suisse d'Electronique et de Microtechnique SA - Recherche et Développement, 2002 Neuchâtel (CH)
(72) Inventor: GHADIMI, Amir, 1022 Chavannes-près-Renens (CH); SATTARI, Hamed, 1030 Bussigny (CH); PRIETO GONZALEZ, Ivan, 2000 Neuchâtel (CH); CHOONGn Gregory, 2000 Neuchâtel (CH)
(74) Representative: e-Patent SA

(57) **Abstract**

Photonic Integrated Circuit comprising a stacking of layers comprising:
a substrate defining a plane and a stacking direction perpendicular to said plane,
a buried oxide layer provided on top of said substrate,
a patterned layer of electro-optic material comprising at least one optical waveguide of said electro-optic material, provided on top of said buried oxide layer,
a first patterned metal layer comprising a first group of metallic structures, provided on top of said electro-optic material and/or said buried oxide layer,
a dielectric cladding volume, provided on top of said buried oxide layer, said patterned layer of electro-optic material and said first patterned metal layer,
a second patterned metal layer comprising a second group of metallic structures embedded in said dielectric cladding volume, wherein there is at least one electrical connection between at least two metallic structures from said first and second groups through at least one via,
**characterized in that** said second patterned metal layer is provided at a distance along the stacking direction between 1 and 2.5 micrometres from said at least one optical waveguide.

## Description

### Technical domain

The present invention concerns a photonic integrated circuit comprising at least one electro-optic waveguide protected by a dielectric cladding comprising metallic structures embedded in said cladding. The invention further relates to methods for manufacturing such devices.

### Related art

Lithium niobate (LiNbO₃) is known for its electro-optical properties which allow interacting with optical signals by means of an electric control. This material is also known for its high transparency across a broad spectral band. These properties, make it an ideal material for photonic integrated circuits (PICs), enabling the implementation of light switches, filters, routers, modulators, adjustable resonators, etc. within millimetre-sized chips. This emerging field is often referred to as Thin Film Lithium Niobate Photonic Integrated Circuit (TFLN-PIC) technology. Nowadays, Lithium tantalate (LiTaO₃) is also attracting increasing interest as an electro-optic material for PICs.

So far, most of the microfabrication technology for PICs has focussed on silicon photonics and complementary metal-oxide semiconductor (CMOS) electronics. Known methods, as illustrated in the patent application US2023/0393340A1, allow creating multi-level interconnections between electronics and optical components at a micrometric scale.

The design and fabrication of highly integrated thin-film electro-optic PICs (TFEO-PICs) deal however with an additional degree of complexity as a result of the electro-optical sensitivity of the photonic material. When high modulation frequencies in the hundreds of MHz and GHz range are considered, the routing of the electric signals becomes a problem *per se,* as the impedance of the conducting lines has a direct impact on the transmission efficiency. The complexity is even greater when considering the coupling with an electro-optic material. A strong electro-optic interaction must be guaranteed at selected structures while avoiding any parasitic signals resulting from reflections or crosstalk between independent conducting lines and optical waveguides.

### Short disclosure of the invention

An aim of the present invention is the provision of a TFEO-PIC comprising electro-optic elements as well as electrically conductive elements, which can be densely packaged while avoiding unwanted interference between the electrical and optical signals.

According to the invention, this aim is attained by the object of the attached claims 1 to 10, and in particular by the provision of a Photonic Integrated Circuit comprising:
a substrate, defining a plane and a stacking direction perpendicular to said plane,
a buried oxide layer provided on top of said substrate,
a patterned layer of electro-optic material comprising at least one optical waveguide, provided on top of said buried oxide layer,
a first patterned metal layer comprising a first group of metallic structures, provided on top of said electro-optic material and/or said buried oxide layer,
a dielectric cladding volume, provided on top of said buried oxide layer, said patterned layer of electro-optic material, and said first patterned metal layer,
a second patterned metal layer comprising a second group of metallic structures embedded in said dielectric cladding volume, wherein there is at least one electrical connection between at least one metallic structure from said first group and at least one metallic structure from said second group, through at least one via,
characterized in that said second patterned metal layer is provided at a distance along the stacking direction between 1 and 2.5 micrometres from said at least one optical waveguide.

In the context of this disclosure, the notions of vertical, bottom, top, above, below, height and the like, refer in all cases to the stacking direction, defined by an axis perpendicular to the PIC's substrate and pointing towards the buried oxide layer and subsequent layers of the PIC. Along this axis, the substrate thus represents the bottom of the stacking, while the other layers are stacked above the substrate.

Also, in this document any reference to a distance between two structures should be interpreted as the shortest distance separating said two structures in the space. In some cases, the notion of "vertical distance" is used as well, referring to the difference of height (distance along the stacking direction) between the highest point or plane of the lower structure and the lowest point or plane of the higher structure.

In the context of this disclosure, a "patterned layer of electro-optic material" refers to a group of substantially planar structures made from an electro-optic material such as Lithium niobate or Lithium tantalate, which are substantially distributed across a common plane. In this case, the bottom surfaces of these electro-optic structures are aligned lying on top of the referred buried oxide layer. Said planar structures are typically shaped in the form of waveguides configured to guide (or transmit) optical signals across a given path. The structures are said to be substantially planar to indicate that they substantially spread on a plane parallel to the substrate plane, as opposed to a free 3D form, where a waveguide could guide an optical signal across the stacking direction. This notion of "planar" should not be interpreted as all the structures having an identical constant height (i.e. thickness along the stacking direction). Indeed, the planar structures may be provided with different heights, for example, to accommodate different optical modes of signals of different wavelengths.

The wording "patterned layer" is in this case derived from a typical fabrication process, involving the provision of a continuous layer of electro-optic material, which is selectively etched, typically through a photolithographic process, to define the planar structures of the layer.

Similarly, each of the first and second "patterned metal layers" comprises several metallic structures substantially distributed across a common plane. Advantageously, these structures may comprise Gold (Au), Copper (Cu) or Silver (Ag).

Such patterned metal layers are typically produced by the deposition of a metal coating on top of an exposed surface covered with a patterned photoresist. After depositing the metal coating, the photoresist is removed, leaving only a "layer" of metallic structures deposited on selected regions of the exposed surface.

Structurally, the metallic structures of the first patterned metal layer can be recognized in that their bottom surfaces are directly lying on top of either the buried oxide layer, or on structures of the electro-optic material.

In contrast, the metallic structures of the second patterned metal layer can be recognized in that their bottom surfaces are free-standing within the cladding volume or, at selected interconnecting positions (vias), their bottom surface may lie in contact with another metallic structure of a lower layer.

The metallic structures of the first patterned metal layer may partly serve as simple conducting tracks for the electronic signals within the PIC, but most importantly, given their proximity to the waveguides of electro-optic material, they can be used as electrodes to create the electric fields which interact with the optical signals in the waveguides. In some cases, these conducting elements of the first patterned metal layer may also be designed as local heating devices, since the optical properties of Lithium niobate can also be modified and controlled through temperature.

The metallic structures of the second patterned metal layer may in contrast be conceived as purely electric conducting tracks, sufficiently distant from any electro-optic material so as to avoid unwanted electro-optic interactions. The provision of this extra layer in the PIC allows an important freedom of RF-design, with efficient distribution of the electrical signals across the PIC. The specified height of at least 1 micrometer above the electro-optic layer, wherein the space between the metal and electro-optic structures is filled with the dielectric cladding material, proves sufficient distance to avoid unwanted interactions between the electric and optical signals, and enables complex designs with multiple crossings of the photonics and electronics structures in the PICs at different levels.

The via connections at specific points allow transmitting the electric signals from the top second patterned metal layer to the lower first patterned metal layer where the wanted interactions with the photonic material are implemented.

At the same time, observing an excessive vertical distance between the second patterned metal layer and the lower layers is problematic for a proper transmission of the electronic signals across layers, especially for high frequency signals. Indeed, the density of the metallic coating within the via is negatively affected when the trans-layer hole is too deep. It is therefore advantageous to limit the height of the second metal layer above the electro-optic structures to a maximum of 2.5 micrometers as indicated before.

According to an embodiment, the PIC may further comprise an additional patterned metal layer comprising an additional group of metallic structures electrically connected through at least one via to at least one metallic structure of the second patterned metal layer. Advantageously, said additional metallic structures are also embedded in the cladding volume and are provided above the second patterned metal layer at a vertical distance not greater than 2.5 micrometres.

An additional patterned metal layer provides higher freedom for routing the electrical signals across the PIC. The maximum vertical distance of 2.5 micrometers is in response to the same constraint of enabling high density vias for the transmission of electric signals across the layers. Further additional metal layers could also be provided for more complex designs.

The cladding volume which covers and/or embeds the photonics and metal layers serves as electrical insulator between the metallic structures as well as mechanical support for the structures of the second and additional metal layers.

According to one advantageous aspect, the cladding volume may extend along the vertical direction at least 0.1 micrometer, preferably at least 0.5 micrometer, above any metallic structures from said second or additional patterned metal layers. In this case the cladding also offers a protection against mechanical, chemical or more generally environmental aggression, to the metallic structures of all the metal layers of the PIC.

Electrical access to the PICs components may be advantageously implemented by providing openings in the cladding volume, suitable for electrically connecting any of said first, second or additional metal layers to an external electronic device by means of bonded metal wires or an adapted interposer.

These configurations are particularly advantageous for the integration of the PICs in photonics system comprising several electronic devices. The process of wire bonding allows a very versatile chip interfacing which is easily adaptable to different systems. Alternatively, the use of interposers is particularly well suited for the integration of components in industrial processes.

Coming back to the provision of electrically conducting elements in the vicinity of the photonic waveguides, according to an advantageous embodiment, the PIC may further comprise a near-field patterned metal layer comprising near-field metallic structures embedded in the cladding volume and provided at a distance between 0.1 and 1 micrometer, preferably between 0.1 and 0.5 micrometer, from at least one optical waveguide of the patterned layer of electro-optic material.

The metallic structures of said near-field patterned metal layer can be recognized by their structure, where the bottom surface of said structures at least partly lie on the cladding, either as a free-standing structure or as an overhang. This is in contrast to the first patterned metal layer where all the structures lie on top of either the buried oxide layer, or on structures of the electro-optic material.

These near-field metallic structures are also recognizable from those of the second patterned metal layer by the distance which separates them from the electro-optic waveguides. Indeed, these near-field metallic structures are intended to provide or enhance the interaction between the electronic signals and the optical signals and are therefore provided in the vicinity of the waveguides.

As will be discussed later in some illustrative embodiments, these near-field metallic structures can be advantageously combined with the metallic structures of the first patterned metal layer to provide more complex multilayer conducting structures in the proximity of the waveguides. For this purpose, the near-field metallic structures and the metallic structures of the first patterned metal layer can be advantageously electrically connected.

Alternatively, some near-field metallic structures may have no electrical contact to any metallic structure from the first, second or additional patterned metal layers, and yet fulfil a function relating to the optical properties of a neighbouring waveguide, as will be discussed later in some examples.

Another aim of the present invention is the provision of methods for manufacturing the disclosed TFEO-PICs. This aim is attained by the object of the attached claims 11 to 15, and in particular by a method of manufacturing a photonic integrated circuit as disclosed above, comprising the steps of :
i) providing an assembly of stacked layers comprising a substrate, a buried oxide layer on top of said substrate, and a continuous layer of electro-optic material on top of said buried oxide layer,
ii) patterning said continuous layer of electro-optic material to conform a patterned layer comprising at least one optical waveguide,
iii) depositing a first patterned metal layer including at least one metallic structure,
iv) depositing a dielectric cladding layer on top of the existing stacking wherein said dielectric cladding layer extends along the stacking direction between 1 and 2.5 micrometres above said at least one optical waveguide,
v) creating at least one pit in the cladding layer communicating with at least one metallic structure of the first patterned metal layer,
vi) depositing a second patterned metal layer, including at least one metallic structure, as well as at least one connection through said at least one pit to said metallic structure of the first patterned metal layer, and
vii) depositing an additional layer of dielectric cladding such as to embed all said metallic structures within the cladding volume.

### Short description of the drawings

Further details of the invention and other advantageous embodiments will appear more clearly upon reading the description below, in connection with the following figures which illustrate:
- Figure 1: schematic representation of a cross-section of a possible embodiment,
- Figure 2: schematic representation of a cross-section of another possible embodiment,
- Figure 3 A and 3B: schematic representations of a connection through a via between metallic structures from different layers according to a possible embodiment,
- Figure 3C: scanning electron microscopy image of a detail of a via connection,
- Figure 4: schematic representation of a cross-section of a possible embodiment comprising near-field metallic structures,
- Figure 5 schematic representation of a cross-section of another possible embodiment comprising near-field metallic structures,
- Figures 6A to 6I: schematic representations of different stages of the fabrication of a PIC according to one example of fabrication method,
- Figures 7A to 7D: schematic representations of different stages of intermediary steps in another example of fabrication method, and
- Figure 8: Block diagram representing an example of a sequence of steps for possible fabrication methods.

### Examples of embodiments of the present invention

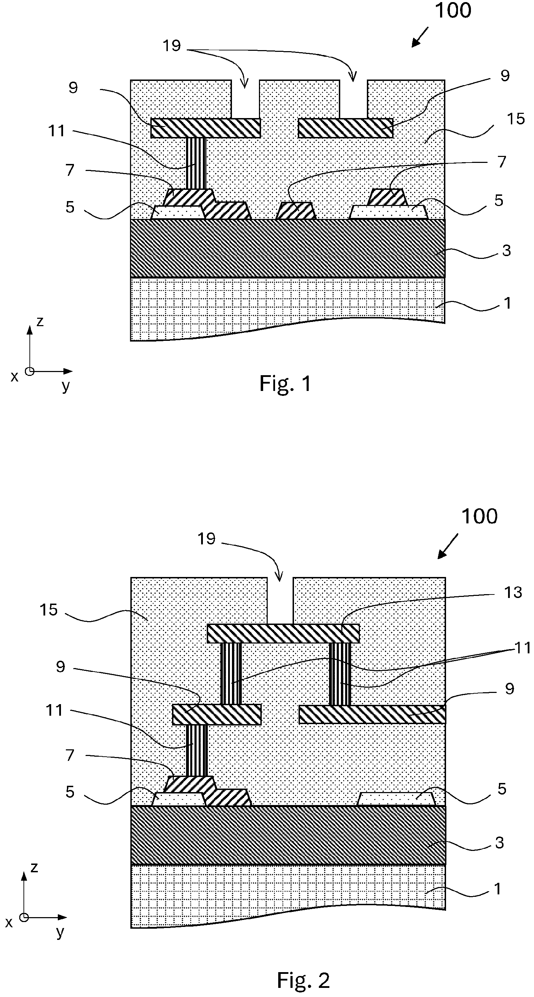

Figure 1 represents a cross-section of a schematic example of PIC 100 according to the invention. Coordinate axes are represented as spatial reference, where the Z axis is oriented along the stacking direction, and the X and Y axis define a plane parallel to the substrate top plane. This convention of axis is maintained through all the figures.

The PIC 100 of Fig. 1 comprises a substrate 1, which supports other higher layers. The substrate 1 can typically be a silicon substrate, for example in the form of a silicon wafer. A silicon substrate can typically have a thickness (or height according to the present coordinates convention) between 300 and 1000 micrometres, preferably between 400 and 800 micrometres.

On top of the substrate 1, there is a buried oxide layer 3, which can typically be a layer of silicon oxide (SiO₂). This layer can have a thickness between 1 and 6 micrometres, preferably between 3 and 5 micrometres.

On top of the buried oxide layer 3, there is a patterned layer of electro-optic material comprising electro-optic structures 5, suitable for transmitting or guiding optical signals and modifying them in the presence of an electric field. Such waveguides typically guide the light through a longitudinal path, like a light pipe. In the case of figure 1, the represented sections of the electro-optic structures 5 correspond to waveguides running out of the figure plane, i.e., parallel to the X axis. On the other hand, the waveguides may describe any path in the XY plane including straight as well as curved portions. The height of these electro-optic structures 5 is not necessarily constant and identical for all the waveguides, but is typically comprised between 200 and 800 nm.

A first group of metallic structures 7 are provided on top of the electro-optic structures 5 and the buried oxide layer 3. These structures define a first patterned metal layer of the PIC 100. The first metallic structures 7 in this example are provided as a coating laid on either an electro-optic structure (right-hand structure 7), or on the buried oxide layer 3 (central structure 7), or on both, the buried oxide layer 3 and an electro-optic structure 5 (left-hand structure 7). As these first metallic structures 7 are conformally deposited on their respective bases, they may present height steps as illustrated for the left-hand structure 7.

The buried oxide layer 3 and the overlaid electro-optic structures 5 and first metallic structures 7 are buried within a volume of dielectric cladding 15. The cladding 15 may comprise silicon dioxide, which can be initially formed from tetraethylorthosilicate gas precursor (TEOS), used as a silica source.

Within the cladding volume 15 there is a second group of metallic structures 9, separated from the electro-optic structures 5, by a vertical distance between 1 and 2.5 micrometers. As already explained, these second metallic structures 9 advantageously allow distributing the electric signals in the PIC without producing unwanted interactions with the optical signals in the waveguides 5.

On the other hand, a via 11 provides an electrical connection between one of the second metallic structures 9 and another from the lower, first metallic structures 7. As already explained, the vertical distance between the second metallic structures 9 and the lower metallic structures is limited to guarantee a high-density via allowing good electric signal transmission between the first and second metallic layers. Further characteristics of possible embodiments of the via 11 will be discussed later.

According to one advantageous aspect, the cladding 15 embeds the second group of metallic structures 9, extending above said structures 9 by at least 0.1 micrometer, preferably at least 0.5 micrometer. Openings 19 on the top surface of the cladding 15 provide access to the second metallic structures 9, to electrically connect them to an external device.

Figure 2 represents a cross-section of another schematic example of PIC 100, provided with an additional layer of metallic structures 13. The additional metallic structures 13 of this additional layer can also be connected to structures 9 of the second metal layer through further vias 11. Advantageously, this additional metal layer is also embedded in the cladding volume 15 and accessible through an opening 19 practiced on the top surface of said cladding 15.

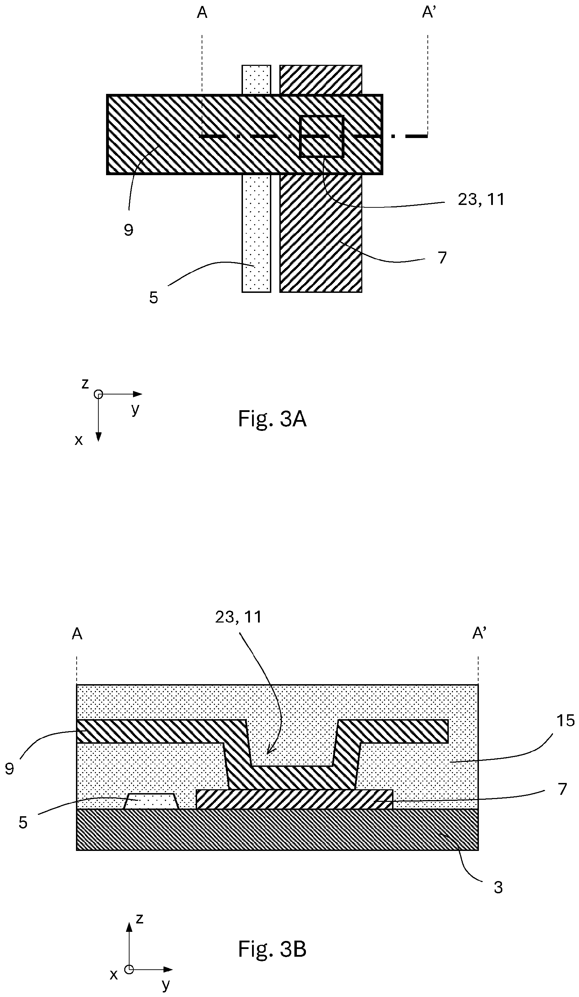

Figure 3A represents a top view (notice the orientation of the coordinate axes) of an interconnection between a lower first metallic structure 7 and a top second metallic structure 9 through a via 11. For illustration purposes, a crossing with an electro-optic waveguide 5 passing below the second metallic structure 9 is also represented. For clarity, the underlying substrate and buried oxide layer, as well as the cladding material are not represented.

In this example, the via connection 11 is constructed as an extension of the second metallic structure 9 which descends through a localized pit 23 establishing electrical contact with the first metallic structure 7. The construction is more clearly visible in Fig. 3B, which represents a cut-view of the section A-A'.

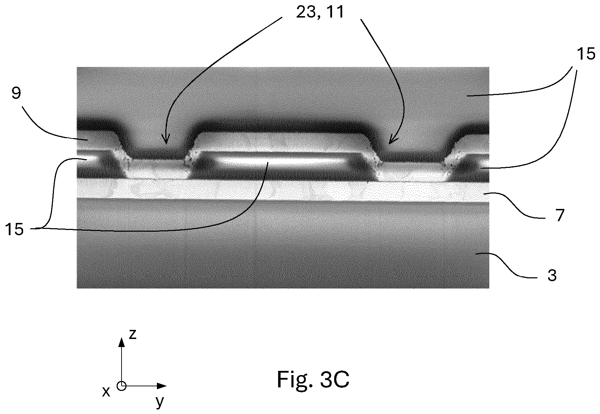

In practice, the electrical continuity across a single pit 23 is not easily guaranteed. It is therefore advantageous to implement the via as an array of such pits providing a well-conducting connection between the upper and lower metallic structures. Figure 3C shows a Scanning Electron Microscopy image of a section of a via constructed as in the example of Figs. 3A and 3B.

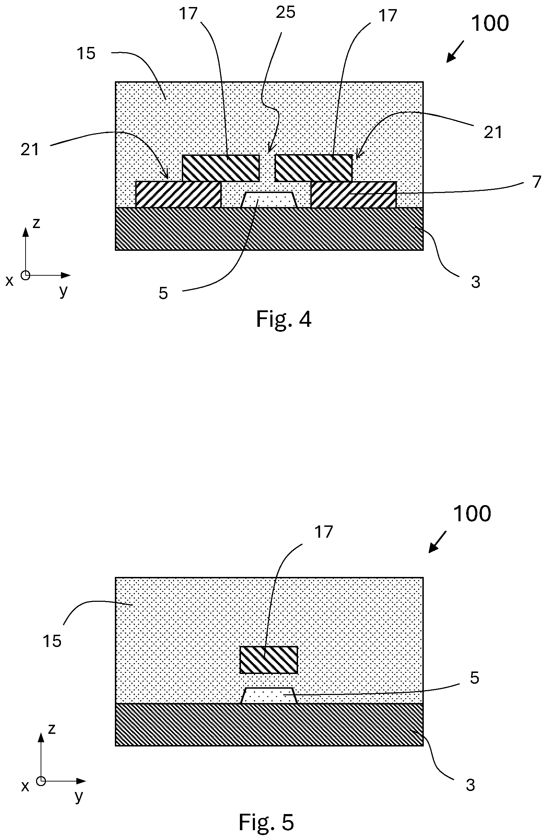

Figure 4 schematically illustrates another embodiment of a PIC 100 further comprising near-field metallic structures 17. For simplifying the view, no via or metallic structure of the second patterned metal layer is illustrated.

The near-field metallic structures 17 are provided in the vicinity of a waveguide 5 of electro-optic material. In the example of Fig. 4, the near-field metallic structures 17 are in electrical contact with corresponding metallic structures 7 of the first patterned metal layer. Moreover, part of the near-field metallic structures 17 extend beyond the top surface of the lower first metallic structures 7, creating an overhang embedded in the cladding material 15. In this example, the electrically coupled structures of the first and near-field metal layers 7, 17 define a pair of overhanging electrodes 21 which partially surround the optical waveguide 5.

Advantageously, the two overhanging electrodes 21 are separated by a narrow gap 25, defined in this example along the Y axis, and presenting a width between 0.2 and 4 micrometres. The gap 25 is also filled with cladding material 15 which electrically isolates the two electrodes 21. This configuration is particularly advantageous to create a highly homogeneous and strong electric field around the waveguide 5 to provide a strong and well controlled actuation on the optical signals through the electro-optic properties of the waveguide 5. In order to provide sufficient interaction length, the pair of overhanging electrodes 21 may advantageously extend parallel to the waveguide 5 along a path of at least 10 micrometres, preferably at least 1 mm, or more.

Figure 5 schematically illustrates another embodiment of a PIC 100 further comprising a near-field metallic structure 17. No metallic structures of the first or second patterned metal layers are illustrated, for simplification of the view.

In this case, the near-field metallic structure 17 has no contact to any other metallic structure of either the first or second patterned metal layers, but is completely suspended in the cladding volume 15, above a waveguide 5, at a distance between 0.1 and 0.5 micrometer. A metallic structure at such close distance to a waveguide can absorb part of an optical signal through the evanescent field at the interface between the waveguide and the cladding. This absorption is polarization dependent and can be utilized to promote the transmission of a unique optical mode, maintaining its linear polarization within the waveguide. The waveguide 5 followed from the top by the near-field metallic structure 17 may thus act as a polarization-maintaining waveguide.

At less than 0.2 micrometer, the absorption by the near-field metallic structure 17 can be advantageously utilized to completely absorb the optical signal. In this case the arrangement of figure 5 can be used as a beam dump within the PIC 100.

For these applications illustrated in Fig. 5, the near-field metallic structure 17 can advantageously extend parallel to the waveguide 5 along a path of at least 10 micrometers, preferably at least 1 mm, or more.

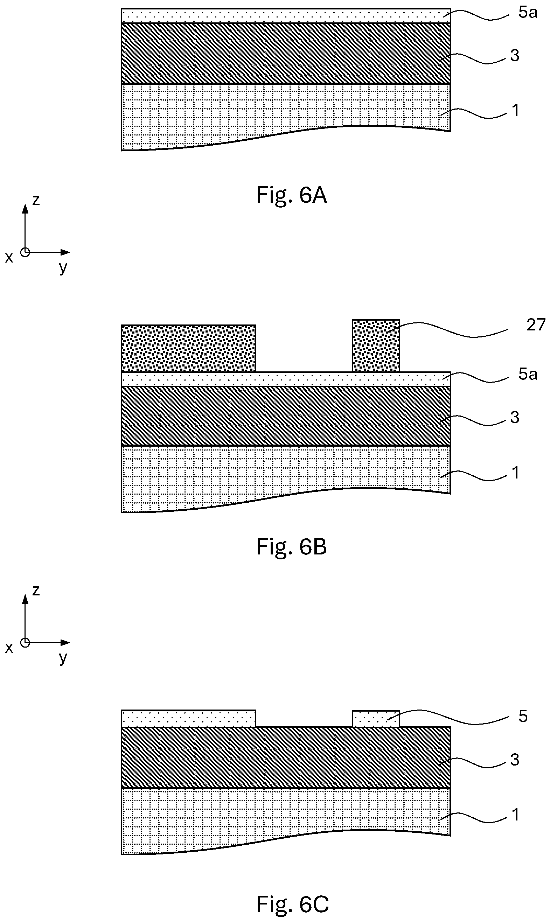

Figures 6A to 6I illustrate different stages of a possible procedure for fabricating a PIC according to the invention.

As represented in figure 6A, a first step i) comprises providing an assembly of stacked layers comprising, along the stacking direction Z : a substrate 1, for example a silicon wafer, a buried oxide layer 3, which can for example comprise silicon dioxide (SiO₂), and a continuous layer of electro-optic material 5a, comprising for example lithium niobate (LiNbO₃).

A second step ii) comprises patterning said continuous layer of electro-optic material to conform a patterned layer comprising at least an electro-optic waveguide 5. First, as illustrated in figure 6B, a photoresist layer 27 is deposited on top of the electro-optic layer 5a and patterned through a standard photolithography process. Then, the electro-optic material is removed by reactive ion etching (RIE) at the places exposed through the photoresist pattern. The RIE process may be advantageously adapted to the nature of the electro-optic material. For example, lithium niobate is preferably etched using physical bombardment with Ar, but other gases like O₂, H₂, N₂ could be used as well. The pressure can be kept low, between 0.1 and 1.4 Pa (or approximately 1 to 10 mTorr). Some fluorine gases (e.g. C₄F₈, CHF₃, CF₄, or more generally CxFy, CxHyFz) may be added to the mixture. Excellent results have been achieved by the inventors using a mixture of Ar and CHF₃. In an example, setting the RF coil power at 300W and the RF bias at 120W leads to an etching speed of a lithium niobate layer between 30 and 50 nm/min. Finally, after the etching process, the remaining photoresist 27 is removed. At the end of this step ii), a patterned electro-optic layer comprising at least an electro-optic waveguide 5 is obtained, as illustrated in figure 6C.

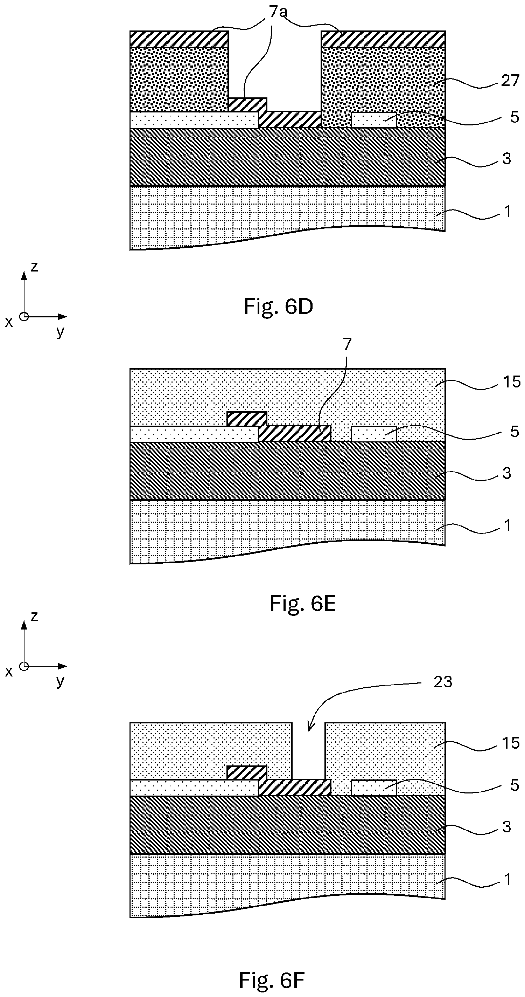

A first patterned metal layer 7a is deposited in a third step iii). This step comprises depositing and patterning a new photoresist layer 27 and depositing a metal layer 7a on top of all the exposed surfaces, as illustrated in figure 6D. The metal layer 7a can be deposited using standard physical vapor deposition (PVD) techniques including thermal evaporation or sputtering. Advantageously, this layer may comprise Gold (Au), Copper (Cu) or Silver (Ag). The third step iii) is completed by removing the photoresist layer 27, leaving only a first group of metallic structures 7 on top of the electro-optic material 5a and/or the buried oxide layer 3, which constitutes the first patterned metal layer (stage not shown in the figures).

A fourth step iv) comprises depositing a dielectric cladding layer 15 on top of the existing stacking, as illustrated in figure 6E. Said dielectric cladding layer 15 may advantageously comprise silicon dioxide (SiO₂) and be formed from tetraethylorthosilicate gas precursor (TEOS). This process can be executed at moderate temperatures (between 200°C and 400°C) for instance by a plasma enhanced chemical vapor deposition (PECVD) as known by the skilled person. According to one aspect of the method, the deposited dielectric cladding layer 15 extends along the stacking direction Z between 1 and 2.5 micrometres above the optical waveguides 5. Advantageously, the top surface of this cladding layer 15 will serve as support and define the position along the stacking direction Z of the metallic structures of the second patterned metal layer.

A fifth step v) illustrated in figure 6F comprises creating at least one pit 23 in the cladding layer 15, opening access to at least one metallic structure of the first patterned metal layer. These pits 23 will serve as via holes for connecting the first and second patterned metal layers in a subsequent step. The pits 23 can be fabricated by RIE through a patterned photoresist defining the position and shape of the access holes for the etching. For a cladding comprising silicon dioxide, the etching can be performed using a gas mixture containing fluorine such as C₄F₈, CHF₃, CF₄, or any equivalent gas (CxFy, CxHyFz). The etching gas may further include Ar, O₂, He, N₂ and H₂ or a combination thereof. Excellent results have been achieved by the inventors using a mixture of CHF₃, SF₆ and O₂. The etching can be performed at low pressure for example in a range between 0.1 to 3 Pa (or approximately 1 to 22 mTorr), preferably at 0.4 Pa (or approximately 3 mTorr). The substrate can be placed on a chuck with Helium back-side cooling and kept at low temperature to avoid degradation of the photoresist mask. A typical range of temperatures is between -10°C and 10°C. This step may be implemented with a RF coil the power of which can be adjusted in a wide range varying from 200 W to 3000 W depending on the equipment, and the RF bias power can be set in a range varying from 10 W to 1500 W. In an example, settings of 300 W for the RF coil and 150 W for the RF bias resulted in a SiO₂ etching speed of 250-300 nm/min.

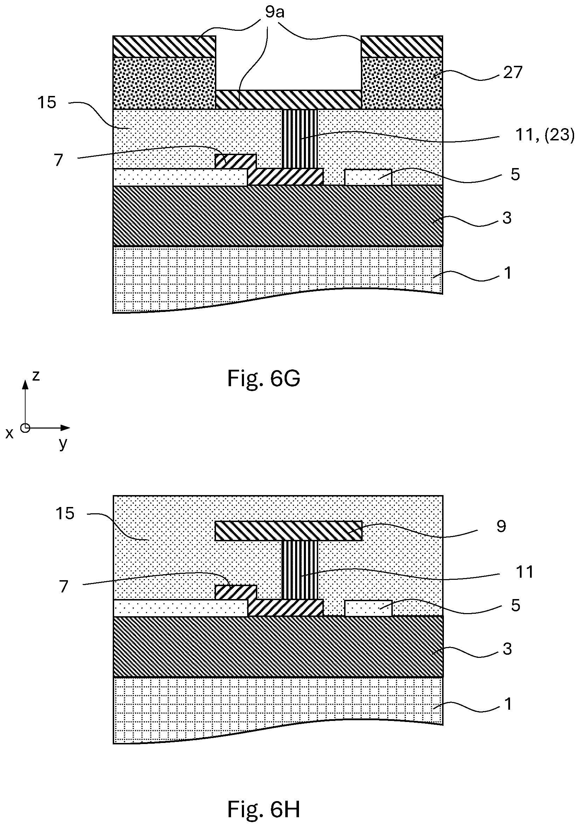

A second patterned metal layer 9a is deposited in a sixth step vi). This step comprises depositing and patterning a new photoresist layer 27 and depositing a metal layer 9a on top of all the exposed surfaces, as illustrated in figure 6G. In this case the photoresist 27 is patterned such as to leave the pit 23 open for the metallization. As for the first metal layer 7a, the second metal layer 9a can comprise Gold (Au), Copper (Cu) or Silver (Ag) and be deposited by standard physical vapor deposition (PVD) techniques including thermal evaporation or sputtering. The sixth step vi) is completed by removing the photoresist layer 27, leaving the second group of metallic structures 9 on top of the cladding layer 15, and at least one of said second metallic structures 9, connected to one of the first metallic structures 7 through the via 11 defined at the pit 23. (Stage not shown in the figures).

Finally, a seventh step vii) comprises depositing an additional layer of dielectric cladding such as to embed all the waveguides 5 and metallic structures 7,9 within the cladding volume 15. Advantageously, this step can be performed with the same methods and materials as in step iv), such that the whole cladding volume 15 is configured as a homogeneous body. The result is visible in figure 6H.

According to one advantageous embodiment, the deposited dielectric cladding layer 15 could extend along the stacking direction Z up to 2.5 micrometres above the second patterned metal layer 9a, to create a new deposition surface where an additional patterned metal layer could be further deposited by repeating the steps v) to vii), with the second patterned metal layer 9a and the additional metal layer playing respectively the roles of the first and second patterned metal layers 7a, 9a in this iteration of the process. This embodiment of the method is not illustrated in the figures.

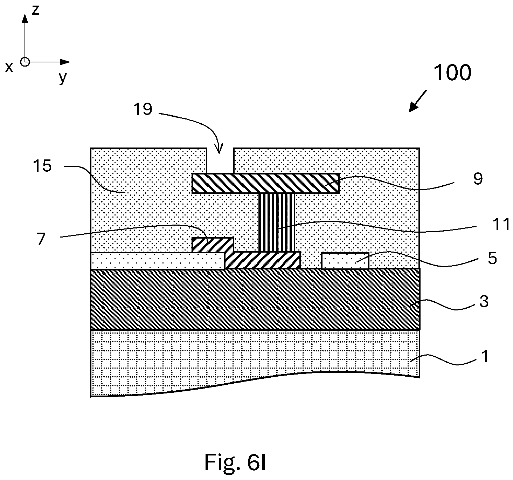

According to another advantageous embodiment, the deposited dielectric cladding layer 15 can extend at least 0.1 micrometer, preferably at least 0.5 micrometer, above the top-most metallic structures of the stacking. In a further optional step viii) illustrated in figure 6I, at least one opening 19 can be created in the cladding volume 15, suitable for electrically connecting the metallic structures 9 to an external electronic device by means of bonded metal wires or an adapted interposer. Advantageously, these openings 19 can be fabricated through the same techniques applied for opening the pits 23 in step v).

Further possible steps comprise the separation of the PIC 100 from the fabrication substrate by any chip singulation method as known by the skilled persons.

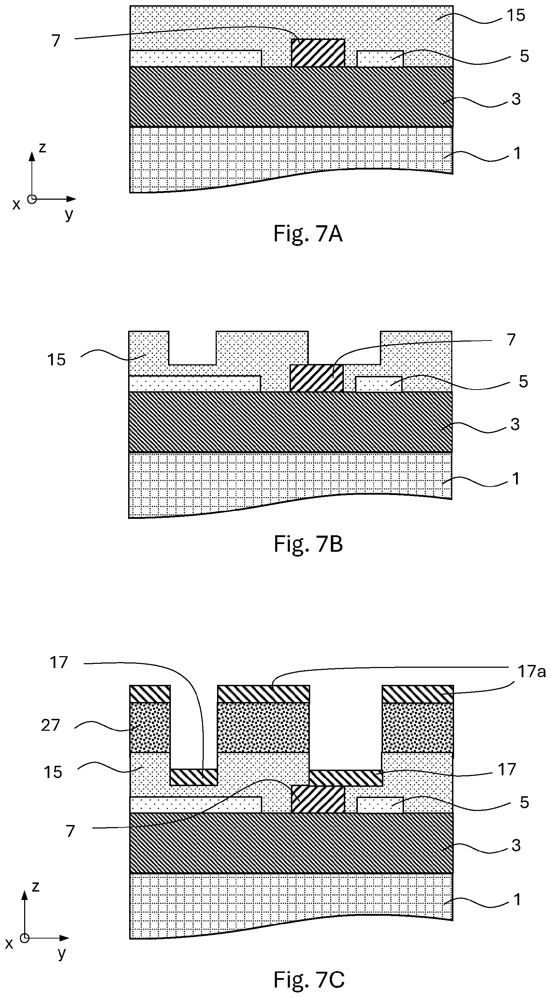

Figure 7A to 7D illustrate different stages of further intermediate steps for fabricating a PIC according to the invention further comprising a near-field patterned metal layer.

In this embodiment of the method, all the steps i) to iii) are implemented exactly as in the previous example referring to figure 6. The step iv) is also implemented, with the difference that in this case, the cladding layer 15 is preferably not as thick as in the previous example. In principle, it can be just barely higher than the level at which the near-field metallic structures will be deposited. This situation is represented in figure 7A.

Then, in a first intermediary step iv_a) the cladding is patterned by a photolithography method as explained before. In this case, the attack is implemented until the etched surfaces reach the level intended for the deposition of the near-field metallic structures, for example, down to a metallic structure 7 of the first layer, or just a few hundreds of nanometers above the waveguides 5, as illustrated in figure 7B.

In a second intermediary step iv_b) a new metal layer 17a is deposited on top of a new patterned photoresist layer 27, creating near-field structures 17 in the vicinity of the waveguides 5. This is illustrated in figure 7C. This step is completed by removing the photoresist 27. The metal deposition techniques can be advantageously the same as described before in step iii).

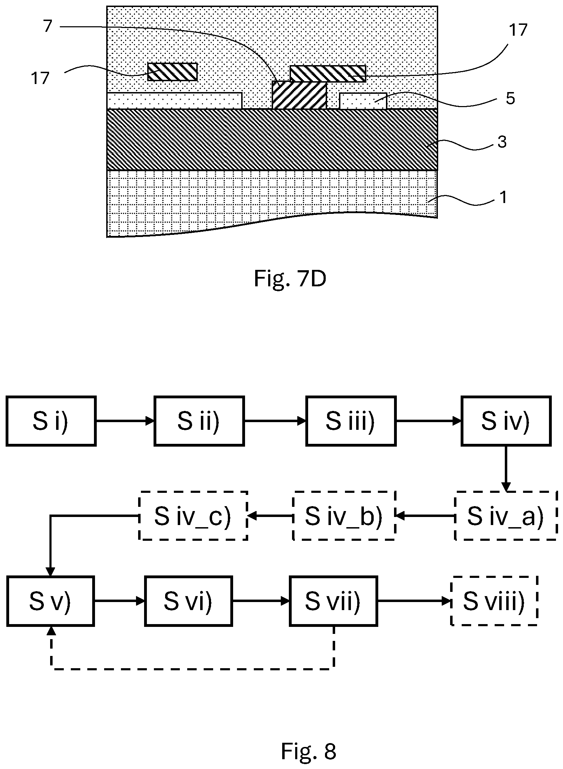

Finally in a third intermediary step iv_c) a new cladding layer is deposited on top of the existing stacking, until said cladding layer extends along the stacking direction Z between 1 and 2.5 micrometres above the optical waveguides 5, as illustrated in figure 7D.

From this point on, the fabrication method may continue with steps v) to viii) as in the previous example.

Figure 8 represents schematically the sequence of steps according to the examples of figures 6 and 7. The intermediary steps S iv_a to S iv_c are represented with discontinuous lines to indicate that these steps, which correspond to the fabrication of a near-filed metal layer are optional. Also, the backwards arrow from step S_vii to S_v is discontinuous to indicate that this is an optional iteration to conform higher additional metal layers. The step S_viii, comprising creating openings 19 in the cladding layer is also optional, as mentioned above.

### Figure References

- 1: Substrate
- 3: Buried oxide layer
- 5a: Layer of electro-optic material
- 5: Electro-optic structure, i.e. optical waveguide
- 7a: First metal layer
- 7: Metallic structure of the first metal layer
- 9a: Second metal layer
- 9: Metallic structure of the second metal layer
- 11: Via; electrical connection between metallic structures from different layers
- 13: Metallic structure of an additional metal layer
- 15: Dielectric cladding
- 17a: Near-field metal layer
- 17: Near-field metallic structure
- 19: Openings
- 21: Overhanging electrode
- 23: Pit (for vias)
- 25: Gap (between overhanging electrodes)
- 27: Photoresist

## Claims

1. Photonic Integrated Circuit (100) comprising a stacking of layers comprising:
a substrate (1), defining a plane (XY) and a stacking direction (Z) perpendicular to said plane,
a buried oxide layer (3) provided on top of said substrate (1),
a patterned layer of electro-optic material(5a) comprising at least one optical waveguide (5) of said electro-optic material, provided on top of said buried oxide layer (3),
a first patterned metal layer comprising a first group of metallic structures (7), provided on top of said electro-optic material (5a) and/or said buried oxide layer (3),
a dielectric cladding volume (15), provided on top of said buried oxide layer (3), said patterned layer of electro-optic material (5) and said first patterned metal layer (7a),
a second patterned metal layer comprising a second group of metallic structures (9) embedded in said dielectric cladding volume (15), wherein there is at least one electrical connection between at least one metallic structure (7) from said first group and at least one metallic structure (9) from said second group through at least one via (11),
**characterized in that** said second patterned metal layer (9a) is provided at a distance along the stacking direction (Z) between 1 and 2.5 micrometres from said at least one optical waveguide (5).

2. Photonic Integrated Circuit (100) according to claim 1, wherein said electro-optic material (5) comprises lithium tantalate (LiTaO₃) or lithium niobate (LiNbO₃).

3. Photonic Integrated Circuit (100) according to any of the preceding claims, further comprising an additional patterned metal layer comprising an additional group of metallic structures (13) electrically connected through at least one via (11) to at least one metallic structure (9) of the second patterned metal layer (9a), wherein said additional metallic structures (13) are embedded in the cladding volume (15) and are provided at distance not greater than 2.5 micrometres along the stacking direction (Z), above said second patterned metal layer (9a).

4. Photonic Integrated Circuit (100) according to any of the preceding claims, wherein the cladding volume (15) extends along the stacking direction (Z), at least 0.1 micrometres, preferably at least 0.5 micrometres, above any metallic structures of any of said metal layers.

5. Photonic Integrated Circuit (100) according to claim 4, wherein the cladding volume (15) comprises openings (19) suitable for electrically connecting any of said metal layers to an external electronic device by means of bonded metal wires or an adapted interposer.

6. Photonic Integrated Circuit (100) according to any of the preceding claims further comprising a near-field patterned metal layer comprising near-field metallic structures (17) embedded in the cladding volume (15) and provided at a distance between 0.1 and 1 micrometer, preferably between 0.1 and 0.5 micrometer, from said at least one optical waveguide (5).

7. Photonic Integrated Circuit (100) according to claim 6, wherein at least one of said near-field metallic structures (17) is in electrical contact with at least one metallic structure (7) of said first patterned metal layer (7a).

8. Photonic Integrated Circuit (100) according to claim 7, comprising a pair of overhanging electrodes (21) partially surrounding said at least one optical waveguide (5) and extending parallel to said waveguide (5) along a distance of at least 10 micrometres, preferably at least 1 mm, wherein each of said overhanging electrodes (21) comprises a first metallic structure (7) from said first patterned metal layer (7a) electrically connected to a near-field metallic structure (17) from said near-field patterned metal layer (17a), said near-field metallic structure (17) extending partially above said optical waveguide (5) at a distance along the stacking direction (Z) between 0.1 and 1 micrometer from said optical waveguide (5), and wherein said pair of overhanging electrodes (21) are separated from each other by a cladding-filled gap (25) defined between the near-field metallic structures (17) of said pair of overhanging electrodes (21), said gap having a width between 0.2 and 4 micrometers.

9. Photonic Integrated Circuit (100) according to claim 6, wherein at least one near-field metallic structure (17) has no electrical contact to any metallic structure from the first or second patterned metal layers (7a, 9a).

10. Photonic Integrated Circuit (100) according to claim 9, wherein said at least one near-field metallic structure (17) has the shape of a metallic track running above and parallel to an optical waveguide (5) of the patterned layer of electro-optic material (5a) along a length of at least 10 micrometers, preferably at least 1 mm, and at a distance along the stacking direction (Z) between 0.1 and 0.5 micrometer from said optical waveguide (5).

11. Method of manufacturing a photonic integrated circuit according to any of the preceding claims, comprising the steps of :
i) providing an assembly of stacked layers comprising a substrate (1), a buried oxide layer (3) on top of said substrate (1), and a continuous layer of electro-optic material (5a) on top of said buried oxide layer (3),
ii) patterning said continuous layer of electro-optic material to conform a patterned layer comprising at least one optical waveguide (5),
iii) depositing a first patterned metal layer (7a) including at least one metallic structure (7),
iv) depositing a dielectric cladding layer (15) on top of the existing stacking wherein said dielectric cladding layer (15) extends along the stacking direction (Z) between 1 and 2.5 micrometers above said at least one optical waveguide (5),
v) creating at least one pit (23) in the cladding layer (15) communicating with at least one metallic structure (7) of the first patterned metal layer (7a),
vi) depositing a second patterned metal layer (9a), including at least one metallic structure (9), as well as at least one connection through said at least one pit (23) to said metallic structure (7) of the first patterned metal layer (7a), and
vii) depositing an additional layer of dielectric cladding such as to embed all the metallic structures (7, 9) within the cladding volume (15).

12. Method according to claim 11, wherein the steps iv) and vii) comprise depositing silicon dioxide (SiO₂) from tetraethylorthosilicate gas precursor (TEOS).

13. Method according to claims 11 or 12, wherein the steps v) to vii) are repeated, mutatis mutandis, to create an additional patterned metal layer for manufacturing a photonic integrated circuit (100) according to claim 3.

14. Method according to any of the claims 12 to 13, further comprising a step viii) of providing at least one opening (19) in the cladding volume (15), suitable for electrically connecting any of the metallic structures in the Photonic Integrated Circuit (100) to an external electronic device by means of bonded metal wires or an adapted interposer.

15. Method according to any of the claims 12 to 14, comprising additional intermediary steps to create near-field metallic structures (17) in a Photonic Integrated Circuit (100) according to claim 6, said additional intermediary steps, being performed after step iv) and before step v), comprising :
iv_a) patterning the cladding layer (15) through a photolithographic process,
iv_b) depositing a near-field patterned metal layer (17), and
iv_c) depositing another layer or dielectric cladding material wherein said dielectric cladding layer (15) extends along the stacking direction (Z) between 1 and 2.5 micrometres above said at least one optical waveguide (5).
